# EUROPEAN PATENT SPECIFICATION

(11) **EP 1 722 650 B1**
(45) Date of publication and mention of the grant of the patent: **26.09.2007**
(21) Application number: 05706038.6
(22) Date of filing: 24.01.2005
(51) Int. Cl.: A44B 18/00

(54) **TOUCH FASTENER PRODUCTS**
KLETTVERSCHLUSSPRODUKTE
PRODUITS A FIXATIONS A BOUCLES ET CROCHETS

(30) Priority: 23.01.2004 US 763747
(43) Date of publication of application: 22.11.2006
(73) Proprietor: VELCRO INDUSTRIES B.V., Curacao (AN)
(72) Inventor: TACHAUER, Ernesto, S., Bedford, NH 03110 (US); KINGSFORD, Howard, A., Amherst, NH 03031 (US)
(74) Representative: Müller-Boré & Partner Patentanwälte
(86) International application number: PCT/US2005/002094
(87) International publication number: WO 2005/072552

(56) References cited:
- US-A- 5 766 385
- US-A- 5 945 193
- US-A1- 2002 169 435
- US-B1- 6 463 634

## Description

### TECHNICAL FIELD

This invention relates to touch fastener products, and more particularly to products including molded touch fasteners and methods for their manufacture, known, for instance, from US-A-5 766 385.

### BACKGROUND

Touch fasteners are used in a variety of articles. To incorporate a touch fastener into an article, a component of the touch fastener, e.g., the hook containing portion, is often secured to the article by conventional methods, such as with an adhesive or by sewing the backing material to the article. In these methods the fastener component is attached to the article after the article is already formed.

In recent years seats for vehicles such as cars and light trucks have been formed by molding a foam bun that will serve as the seat cushion, and then attaching a pre-stitched fabric cover to the foam bun. Often, the fabric cover is attached to the foam bun by insert molding touch fastener strips into the outer surface of the foam bun and attaching cooperating touch fastener strips to an inner surface of the fabric cover. Generally, the fastener strips are attached to the fabric cover along the seams where the cover is stitched together and held in place by the seam stitching. The touch fastener strips allow the seat manufacturer to rapidly and permanently attach the fabric cover to the foam bun by pulling the fabric cover over the foam bun and pressing the opposed touch fastener strips on the foam bun and fabric cover together.

The touch fastener strips on the foam bun are typically recessed in trenches to allow the seams in the fabric cover to be indented below the surface of the seat cushion. Indenting the seams in this manner forms aesthetically appealing indented creases in the surface of the seat cushion upholstery for a tailored look and accommodates the additional thickness of upholstery fabric that is created where the seam is stitched.

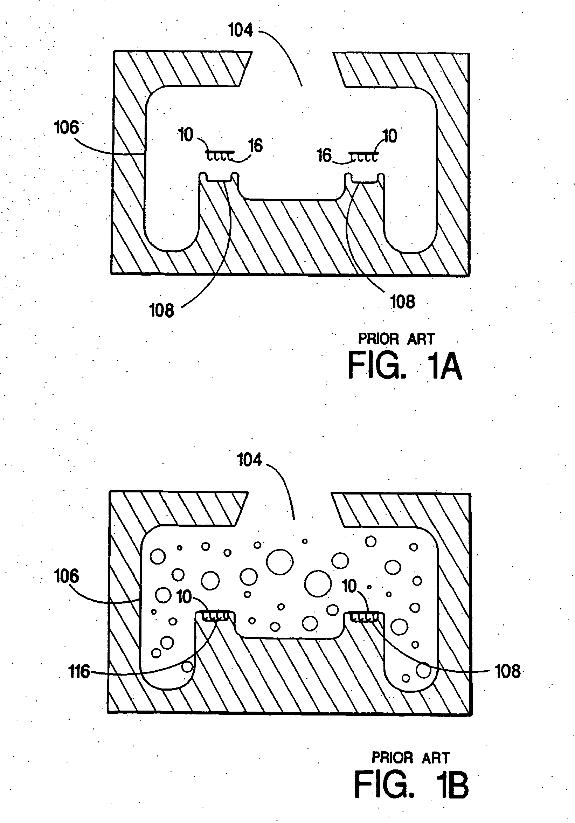

The touch fastener is positioned in the mold such that the touch fastening surface is flush against a surface of the mold causing the touch fastening surface to be exposed in the finished foam product. For example, referring to Fig. 1a, a touch fastener 10 is placed in a mold cavity 104 with the fastener elements 16 positioned adjacent a depression 108 for the positioning of the touch fastener 10. Referring to Fig. 1b, once the touch fastener 10 is correctly positioned into the depression 108 in the mold surface 106, liquid foaming material, such as a two-component polyurethane system, is poured or injected into the mold cavity 104. The foaming material then solidifies, and the entire foam block is removed from the mold cavity with the fastener adhered to its surface.

When using such a molding process, care must be taken to avoid fouling of the touch fastening surface with the liquid foamable composition. Fouling may occur if the liquid foaming composition leaks around the edges of the base of the touch fastener into the space between the fastener elements (e.g., hooks).

### SUMMARY

The invention is characterized by claims 1, 14, 18, 26 and 28.

Various aspects of the invention can allow a touch fastener or other product to be formed into the shape of an article, thereby eliminating the necessity of a separate step of attaching the touch fastener to the article. Accordingly, in some aspects, the present invention can reduce manufacturing costs by saving both the costs of labor and costs of material.

In one aspect, the invention features a method of making a molded sheet form product having a non-planar topography. The method includes providing a sheet form base, the sheet form base having an upper face, a lower face, and an array of discrete projections extending (e.g., substantially perpendicularly) from the upper face of the sheet form base, and subsequently thermoforming the sheet form base to provide a molded sheet form product having a non-planar topography. The sheet form base is thermoformed in such as way that a region of the base from which the projections extend becomes reoriented (e.g., the portion of the base having a non-planar topography). However, the projections do not become significantly reoriented in their relative position on the base (e.g., they remain substantially perpendicular to the portion of the base from which they extend).

In one aspect, the invention features a method of making a touch fastener having a non-planar topography. The method includes providing a sheet form base, the sheet form base having an upper face, a lower face, and a plurality of male fastener elements, each fastener element having a stem molded integrally with and extending from the upper face of the sheet form base; and subsequently thermoforming the sheet form base to provide a touch fastener having a non-planar topography.

In some instances, the method also includes continuously introducing molten resin to a gap formed along a peripheral surface of a rotating mold roll, such that the resin forms at least a part of the sheet form base at the peripheral mold roll surface and fills an array of fixed cavities defined in the rotating mold roll to form portions of the fastener elements as projections extending from the upper face of the sheet form base; solidifying the resin; and removing the solidified resin from the peripheral surface of the mold roll by pulling the projections from their respective cavities. The gap can be defined, for example, between the mold roll and a counter-rotating pressure roll or between the mold roll and an injection die.

In some instances, the method also includes continuously introducing the sheet form base into a buffer region; and thermoforming the sheet form base to include a plurality of non-planar regions.

In some instance, the method also includes continuously introducing molten cross-linkable resin to a gap formed along a peripheral surface of a rotating mold roll such that a cross-linkable resin forms at least a portion of the stems of the male fastener elements; continuously introducing a thermoformable resin into the gap formed along a peripheral surface of a rotating mold roll such that the thermoformable resin forms at least a portion of the sheet form base; solidifying the cross-linkable and thermoformable resins; and removing the solidified resins from the peripheral surface of the mold roll by pulling the projections from their respective cavities.

The sheet form base can include, for example, a thermoplastic resin such as polypropylene, PE, PET, high impact polystyrene, polymethylmethacrylate, rigid PVC, plasticized PVC, polycarbonate, and the like.

In some instances, the method also includes forming loop engageable heads on the stems. The heads can be formed, for example, on previously molded stems or can be molded simultaneously with stems in fastener shaped molding cavities.

In some instances, the sheet form base is thermoformed using vacuum applied to the lower face of the sheet form base.

In some instances, the sheet form base is at least about 0,025 mm (e.g. 0,025, 0,051, 0,127, 0,254, 0,635, 1,27, 2,54 or 5,08) [0.001 inch (e.g., 0.001, 0.002, 0.005, 0.010, 0.025, 0.050, 0.1, or 0.2)] and at most about 25,4 mm (e.g. 12,7, 10,16, 7,62, 5,08, 2,54) [1.0 inch (e.g., 0.5, 0.4, 0.3, 0.2, 0.1)] less than about thick.

In some instances, the sheet form base is thermoformed at between about 93°C (200 °F) and about 316°C (600 °F). For example, the upper face of the sheet form base is exposed to a temperature of between about 149°C (300 °F) and about 288°C (550 °F) and the lower face of the sheet form base was exposed to a temperature of 93°C (200°F) and about 316°C (600 °F).

In some instances, the fastener elements include a cross-linkable resin and the sheet form base includes a thermoplastic resin.

In some instances, the sheet form base is thermoformed into an undulating surface.

In some instances, the sheet form base is thermoformed into an open bowl. The open bowl can include, for example, a flange at a rim of the open bowl.

In some instances, the sheet form base is thermoformed into a mold liner.

In some instances, the sheet form base is thermoformed into a framework.

In another aspect, the invention features a method of making a plurality of touch fasteners having a non-planar topography. The method includes providing a sheet form base, the sheet form base having an upper face, a lower face, and a plurality of male fastener elements, each fastener element having a stem molded integrally with and extending from the upper face of the sheet form base; and thermoforming a continuous sheet form base to provide a plurality of touch fasteners having a non-planar topography.

In still another aspect, the invention features a touch fastener. The touch fastener includes a sheet form base having an upper face and a lower face, the upper and lower faces having complementary non-planar topography to define therefrom a nominal thickness such that the sheet form base forms a stable structure of three-dimensional contours in an unloaded state, and a plurality of male fastener elements, each fastener element having a stem molded integrally with and extending from the upper face of the sheet form base, wherein at least some of the male fastener elements extend from a contoured region of the sheet form base.

In some instances, the sheet form base has a thickness of less than 1,27mm (0.05 inches).

In some instances, the structure of the sheet form base includes a repeating V-shape.

In some instances, the structure of the sheet form base includes an undulating pattern.

In some instances, the sheet form base is flexible.

In yet another aspect, the invention features a touch fastener including a sheet form base having an upper face and a lower face, the upper and lower faces having complementary non-planar topography to define therefrom a nominal thickness such that the sheet form base forms a stable structure of three-dimensional, non-linear contours in an unloaded state; and a plurality of male fastener elements, each fastener element having a stem molded integrally with and extending from the upper face of the sheet form base.

In some instances, the sheet form base has a thickness of less than 1,27mm (0.05 inches).

In another aspect, the invention features a mold insert including a sheet form base having an inner face and an outer face, the inner and outer faces having complementary non-planar topography to define therefrom a nominal thickness, wherein the sheet form base defines a open bowl structure that is stable in an unloaded state; and a plurality of male fastener elements, each fastener element having a stem molded integrally with and extending from the inner face of the sheet form base.

In some instances, the sheet form base includes a flange extending from a rim of the bowl. The flange can include, for example, metallic particles and/or metallically attractive particles.

In some instances, the thickness of the sheet form base is less than 10,16 mm (0.4 inches).

In some instances, the open bowl structure is flexible.

In some instances, the bowl is constructed to withstand greater than atmospheric pressure exerted on the outside of the bowl without collapse.

In some instances, the open bowl structure is elongated.

In some instances, the sheet form base includes metallic and/or metallically attractive particles.

In still another aspect, the invention features a framework. The framework includes a sheet form base having an upper face and a lower face, the upper and lower faces having complementary non-planar topography to define therefrom a nominal thickness such that the sheet form base forms a stable structure of three-dimensional contours in an unloaded state, and wherein the sheet form base defines an aperture; and a plurality of male fastener elements, each fastener element having a stem molded integrally with and extending from the upper face of the sheet form base.

In some instances the sheet form base defines a plurality of apertures bounded by elongated segments of the framework, each segment carrying multiple fastener elements.

In yet another aspect, the invention features a method of making a molded article. The method includes providing a mold defining a mold cavity; inserting a mold liner into the mold cavity, the mold liner including a sheet form base having an inner face and an outer face, the inner and outer faces having complementary non-planar topography to define therefrom a nominal thickness such that the sheet form base forms a stable structure of three-dimensional contours in an unloaded state and a plurality of male fastener elements, each fastener element having a stem molded integrally with and extending from the outer face of the sheet form base, wherein the mold liner is shaped to conform to at least a portion of the molded article; and placing the mold liner against the surface of the mold so the fastener element extends toward the surface of the mold; and delivering a foam into the mold cavity and allowing the foam to solidify.

In some instances, the mold liner is sized to extend across an extent of the mold cavity to position the fastener elements.

In some instances, the topography of the mold liner defines a trench in the molded article.

In some instances, the mold liner also includes a material adhered to the inner surface of the sheet form base.

In some instances, mold liner also includes protrusions extending from the inner face of the sheet form base, extending away from the surface of the mold.

The details of one or more embodiments of the invention are set forth in the accompanying drawings and the description below. Other features and advantages of the invention will be apparent from the description and drawings, and from the claims.

### DESCRIPTION OF DRAWINGS

Fig. 1a is a cross-sectional view of a mold for forming a foam bun.
Fig. 1b is a cross-sectional view of the mold of Fig. 1a with touch fasteners positioned in the trenches and filled with molding material.
Figs. 2a-2b are schematic depictions of a method of thermoforming a touch fastener.
Fig. 2c is a cross-sectional view of a touch fastener made from the scheme depicted in Figs. 2a and 2b.
Fig. 2d depicts a method of thermoforming a touch fastener.
Fig. 2e depicts a cross-sectional view of a touch fastener made from the method depicted in Fig. 2d.
Figs. 3a and 3b depict methods of thermoforming a molded touch fastener.
Fig. 3c is a cross-sectional view of a thermoformed touch fastener having a material adhered to the lower face of the sheet form base.
Figs. 4a and 4b are perspective and cross-sectional views respectively of a thermoformed touch fastener defining the shape of a bowl.
Fig. 5a is a perspective view of a thermoformed touch fastener defining the shape of a bowl, having a flange around its rim.
Fig. 5b is a cross-sectional view of a mold with the touch fastener of Fig. 5a positioned therein.
Fig. 5c is a cross-sectional view of a touch fastener having flanges at the base of the sheet form base and magnets positioned adjacent to the flanges.
Fig. 5d is a cross-sectional view of a touch fastener having magnetically attractive particles within the sheet form base.
Figs. 6a is a cross-sectional view of a thermoformed touch fastener that is sized and shaped to be a mold liner.
Figs. 6b and 6c are cross-sectional views of thermoformed mold liners having distinct configurations regarding the shape and placement of the trenches of a seat form bun.
Figs. 7 is a perspective view of a framework that includes a thermoformed touch fastener.
Fig. 8a is a cross sectional view of a portion of a framework having a window positioned therein.
Fig. 8b is a cross sectional view of a portion of a framework having an air conditioning unit positioned therein.
Fig. 9a is a cross-sectional view of a thermoformed undulating touch fastener.
Fig. 9b is a cross-sectional view of the undulating touch fastener of Fig. 9a positioned between a floor and a sub floor.
Fig. 10 is a cross-sectional view of touch fastener thermoformed in a repeating V pattern.
Figs. 11a-c are schematic depictions of a method of thermoforming a touch fastener.

Like reference symbols in the various drawings indicate like elements.

### DETAILED DESCRIPTION

Methods of forming molded touch fasteners having stems or fastener elements extending integrally therefrom are well known in the art. For example, a continuous extrusion/roll-forming method for molding fastener elements on an integral, sheet-form base is described in detail in U.S. Patent No. 4,794,028 and in U.S. Pat. No. 4,775,310.

In some instances, it is desirable to incorporate touch fasteners into an article, for example, a sheet form bun or a framework. One efficient way to incorporate fastener elements into an article is by thermoforming the touch fastener into a shape, for example, the shape of the article or a shape that can be incorporated into the article.

Thermoforming is a method of manufacturing plastic parts by preheating a flat piece of plastic and then bringing it into contact with a mold to cause the plastic to take the shape of the mold. Thermoforming can be accomplished in a variety of ways, for example, by vacuum, pressure, and/or direct mechanical force. Thermoforming offers close tolerances, tight specifications, and sharp detail. In many instances, thermoforming can produce a product of comparable quality to injection molding at a fraction of the cost.

Thermoforming can accommodate sheets (e.g., a sheet form base) of varying thickness, for example, at least about 0,025 mm [1 mil (0.001 ")] and at most about 25,4 mm (e.g. about 0,508 mm, about 1,27 mm, about 12,7 mm, etc.) [1" (e.g., about 20 mil, about 50 mil, about 0.5 inches, etc)]. Various types of resins can be thermoformed including but not limited to crystalline resins such as polypropylene, PE and PET, and amorphous resins such as high impact polystyrene, rigid PVC and polycarbonate. The resin can be, for example, in the form of a solid sheet or in the form of a foamed sheet.

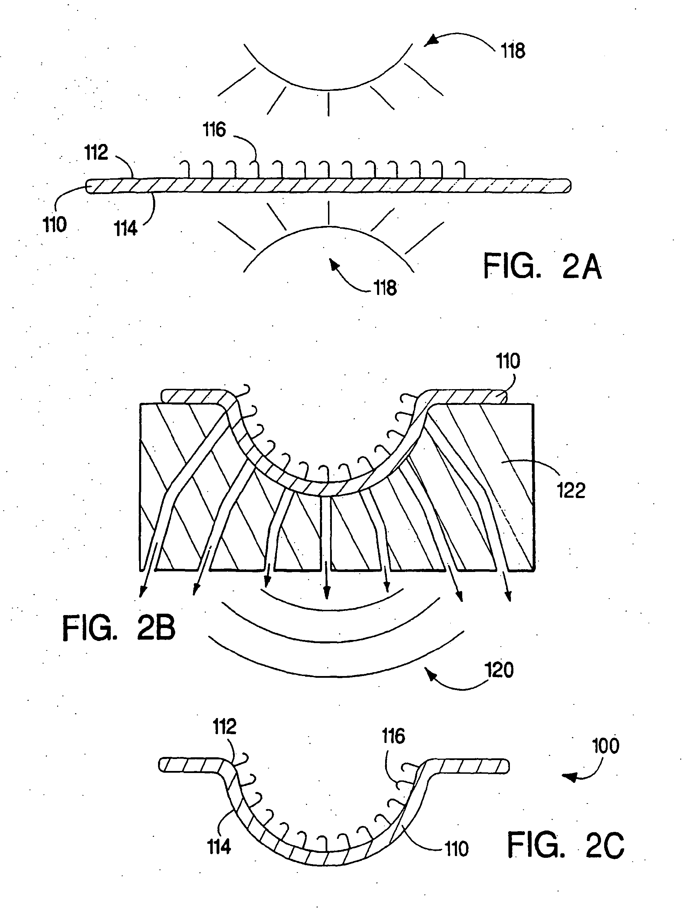

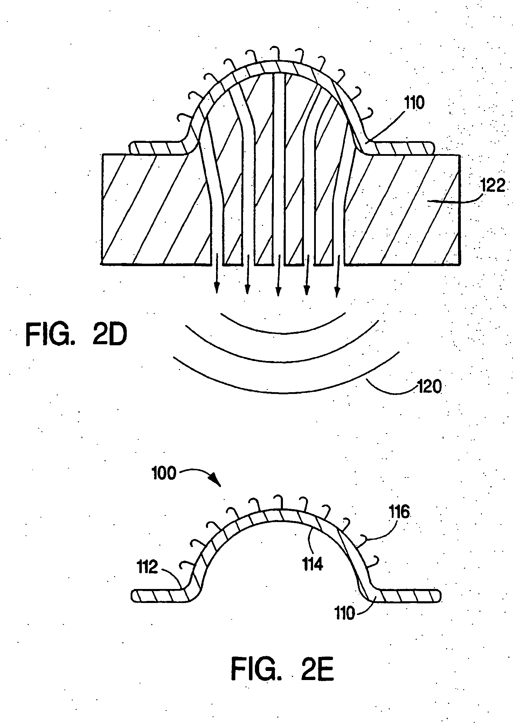

A method of making a thermoformed touch fastener is depicted in Figs. 2a-2b. Referring to Fig. 2a, a molded sheet form base 110 is provided, the base 110 having an upper face 112 that carries male fastening elements 116 and a lower face 114. The upper and lower faces 112 and 114 of the sheet form base 110 are subjected to radiant heat 118 until the sheet form base 110 has reached a desired temperature. In some instances, the lower face 114 of the sheet form base 110 is subjected to a higher temperature than the upper face 112 of the sheet form base 110 in order to prevent the fastening elements 116 from melting. Once the sheet form base 110 has reached the desired temperature, it is exposed to vacuum pressure 120 and thermoformed in a mold 122 (see Fig. 2b). Referring to Fig. 2c, the resulting touch fastener 100 is generally non-planar, with male fastener elements 116 extending from the generally concave surface of the upper face 112. Alternatively, referring to Figs. 2d and 2e, the sheet form base 110 can be thermoformed into a mold 122 to form a generally convex shape of the upper face 112. Once the sheet form base 110 is formed into the non-planar thermoformed touch fastener 100,' the touch fastener 100' is cooled and finished, for example by cutting the touch fastener 100' and removing it from the remainder of the sheet form base 110. Any unused portions of sheet form base 110 can be recycled.

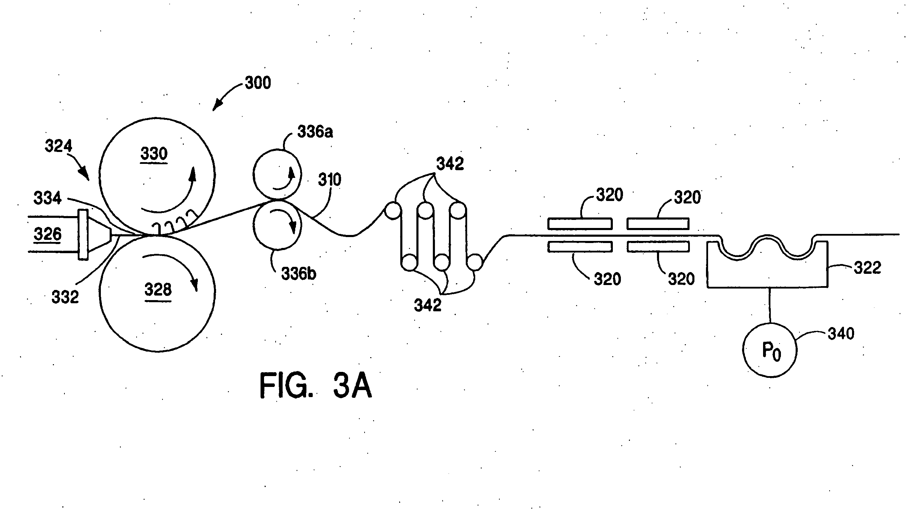

Thermoformed touch fasteners can be processed continuously or discontinuously, with continuous processes being generally preferred. One suitable continuous process is shown in Fig. 3a, a sheet form base 310 is continuously provided from a continuous extrusion/roll-forming method for molding fastener elements on an integral, sheet-form base 310. As shown in Fig. 3a, sheet form base 310 is formed by an extrusion apparatus 300 including a molding/calendering assembly 324. The assembly includes an extrusion head 326, a base roll 328, and a mold roll 330. In Fig. 3a, the relative position and size of the rolls and other components is not to scale. The extrusion head 326 supplies a continuous web of molten resin 332 to a nip 334 formed between a base roll 328 and a mold roll 330. Guide rollers 336a and 336b are situated diagonally upwardly to assist in the removal of the sheet form base 310 from mold roll 330.

Once formed, the sheet form base 310 is then preheated from both sides via radiant heaters 320 to a processing temperature that is dependent both on the type of resin and the thickness of resin. Once the sheet form base 310 has reached the desired temperature, it is formed via vacuum pressure 340 in a mold 322, thus conforming the sheet form base 310 to the three dimensional contour of the mold 322. As can be seen in Fig. 3a, a continuous supply of sheet form base 310 is being provided into the thermoforming process. Accordingly, the thermoforming process is repeated in a continuous manner using the supply of sheet form base 310 depicted in Fig. 3a. In order to compensate for the time required to thermoform the sheet form base 310, a buffer system 342 is incorporated between the extrusion apparatus 300 and the mold 322. The buffer system 342 allows sheet form base 310 to continually collect during the thermoform process, for example, by elongating the path between the extrusion apparatus 300 and the mold 322.

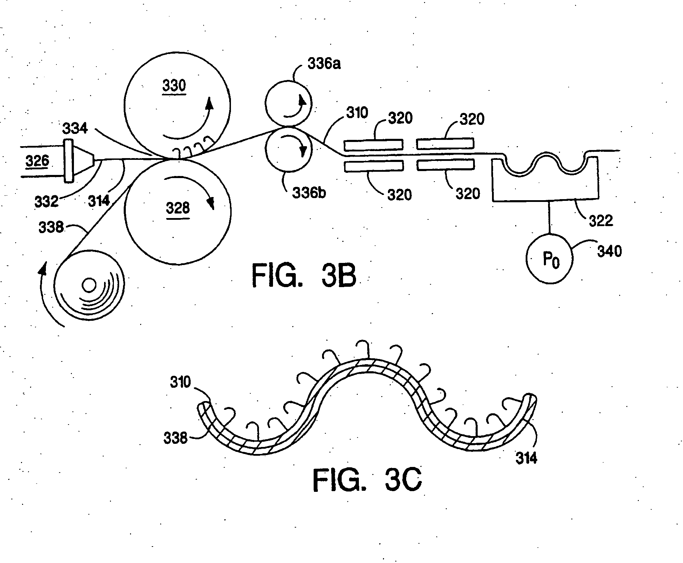

Referring to Fig. 3b, in an alternative process but similar process to that depicted in Fig. 3a, a sheet material 338 is adhered to the lower face 314 of the sheet form base 310. As molten resin 332 enters nip 334, sheet material 338 is fed through the nip 334 between the base roll 328 and the molten resin 332, causing the material 338 to become physically attached to the molten resin 332 and thus to lower face 314 of the sheet form base 310 (Fig. 3c). The material 338 can be used, for example, to provide improved compatibility between the touch fastener and a molded article when the touch fastener is used in a molding process.

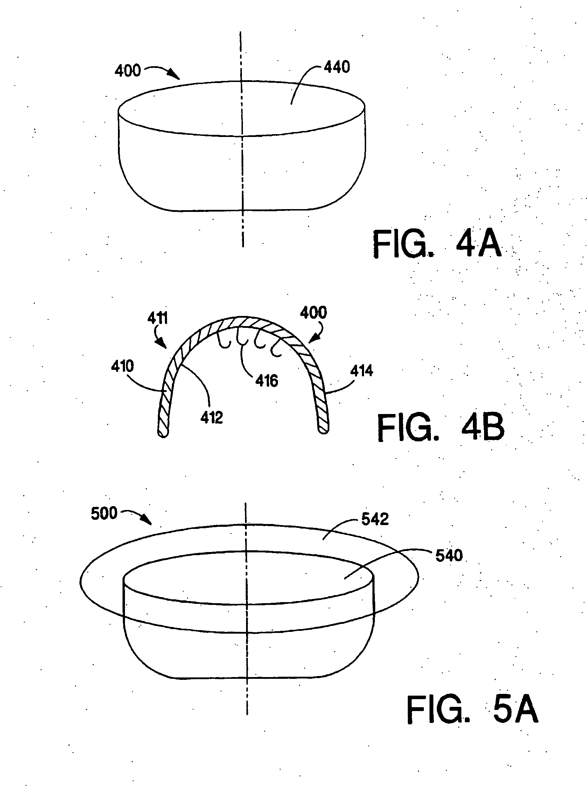

The methods described herein can be used to form a touch fastener that is used as a mold insert, i.e., a structure that can be placed in a mold cavity to change the shape defined by the mold cavity. For example, mold insert 400 shown in Fig. 4a defines a bowl like structure having a hollow interior portion 440. Referring to Fig. 4b, the mold insert 400 includes a sheet form base 410 having a portion 411 that is generally arcuate in cross-section. Base 410 has an inner face 412 and an outer face 414. The touch fastener also includes a plurality of fastener elements 416 that extend from the inner face 412 in the arcuate portion 411.

The sheet form base 410 can be made of various thermoformable plastics or resins including PVC (polyvinyl chloride), PP (polypropylene), PET (polyethyleneterephtalate), PS (polystyrene) and many others, as known to those of skill in the art. A resin refers to any of numerous polymerized synthetic or chemically modified natural moieties, including thermoplastic materials such as polyvinyl, polystyrene, and polyethylene which can be used with fillers, stabilizers, pigments, and other components to form plastics.

In some instances, it is desirable to form the fastener elements out of a first resin and the sheet form base element from a second resin. For example, in some instances, it is desirable to form the hooks from a cross-linkable resin and form the sheet form base with a thermoformable resin. This configuration reduces the likelihood of melting the hooks when thermoforming the touch fastener.

In some instances, especially as shown in Fig. 5a, the touch fastener 500 defines a hollow bowl-like structure 540, providing a flange 542 at the rim of the mold insert 500, see e.g., Fig. 5a. The flange can provide additional contact area between mold insert 500 and the surface of a mold, which can provide an improved barrier against fouling of the touch fasteners. Additionally, the flange can provide increased mechanical stability to touch fastener 500.

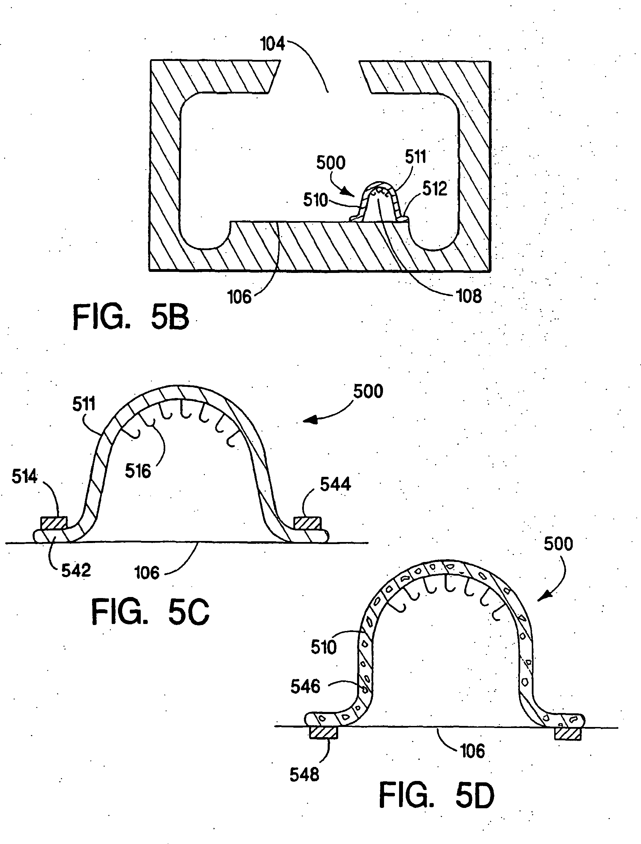

Referring to Figs. 5b, mold insert 500 can be used to provide a trench 108 on the surface 106 of a mold cavity 104, such as is used in forming a seat foam bun. Using the touch fastener 500 to provide shape and contour to a mold cavity can reduce costs as it provides the flexibility of allowing the use of a single mold to make a variety of seat cushions, which can differ with regard to the size or placement of the trench. As shown in Fig. 5b, the fastening elements 516 are positioned to face the surface 106 of the mold cavity 104. While the mold insert 500 has fastener elements 516 covering only part of the arcuate portion 511, in other embodiments, fastener elements 516 can cover substantially the entire arcuate portion 511 of the mold insert 500, or fastener elements 516 can cover substantially the entire surface of the sheet form base 510. The flange provides additional contact area between the mold insert 500 and the surface 106 of a mold 100, thus providing additional seal to prevent or minimize fouling of the fastener elements 516 during the molding process.

The mold insert 500 can be positioned in mold cavity 104 by magnets. In some instances (see Fig. 5c), where the mold insert 500 has a flange 542, a magnetically attractive material 544 (e.g., a magnet) is attached to the flange 542. In this case, mold insert 500 is positioned in the mold cavity 104 so that at least a portion of the flange 542 is between the magnetically attractive material 544 and the mold surface 106. The magnetic attraction provides strength to the seal between the touch fastener 500 and the surface of the mold cavity 106, reducing the amount of fouling to the fastener elements 516 that can occur during a molding process. In some instances (see Fig. 5d), the sheet form base 510 of the touch fastener 500 can include magnetically attractive material 544 embedded therein. For example, the polymer resin of the sheet form base 510 can contain iron particles 544 or other metallic materials (e.g., nylon doped with iron filings). Where iron particles 544 are embedded in the touch fastener 500, a magnet 548 is positioned in the mold to attract the touch fastener 500 to the mold surface 106.

Suitable processes for insert molding a foam bun onto a touch fastener are described in U.S. Patent No. 5,945,193, to Pollard, entitled TOUCH FASTENER WITH POROUS METAL CONTAINING LAYER. Processes describing the incorporation of a magnetic attractant into touch fastener products are disclosed in U.S. Patent No. 6,129,970 to Kenney et al., entitled TOUCH FASTENER WITH MAGNETIC ATTRACTANT AND MOLDED ARTICLE CONTAINING SAME.

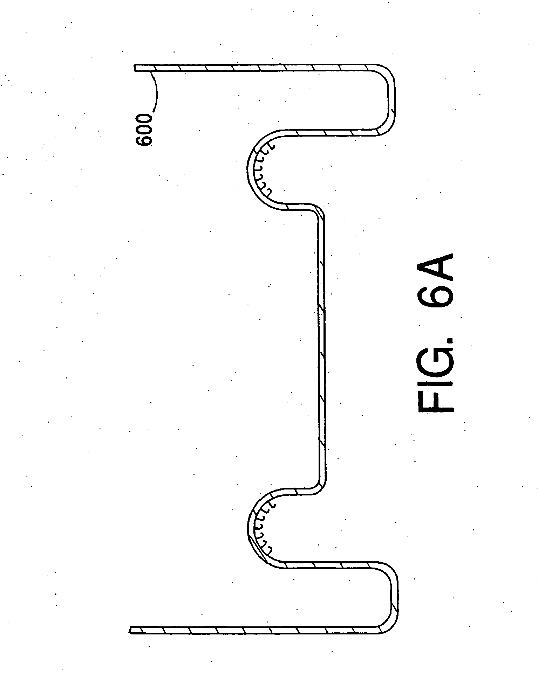

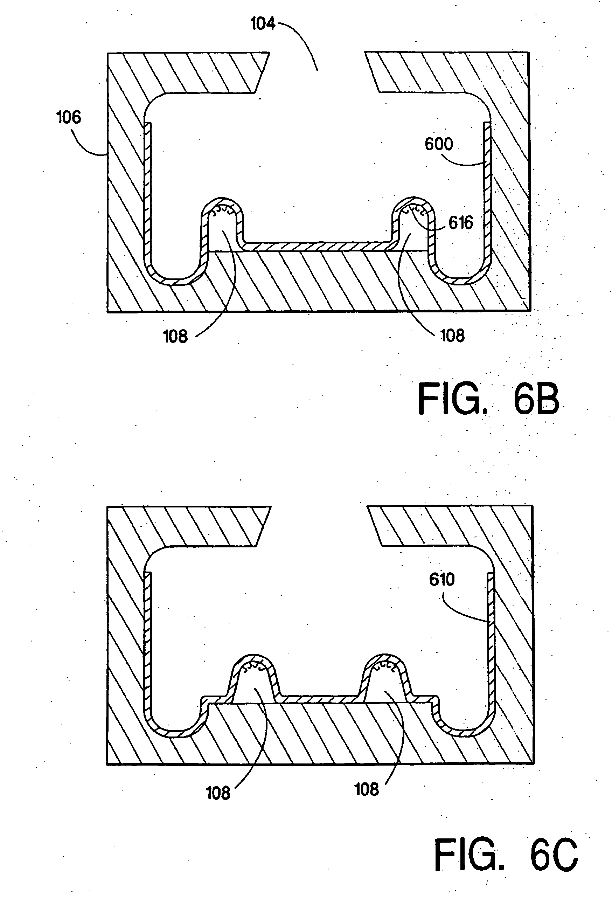

In some instances, the touch fastener can be thermoformed into a mold liner, for example, mold liner 600 shown in Fig. 6a. Referring to Fig. 6b, mold liner 600 can cover substantially the entire surface of the lower portion of the mold cavity, and can provide structural elements to the mold surface 106. For example, the mold liner 600 can provide one or more trenches 108 in the mold cavity 104, with fastening elements 616 positioned in the trench 108 pointing towards the mold surface 106. One advantage of using a mold liner is that it allows a single mold cavity to be used with more than one configuration of structural elements. For example, comparing Figs. 6b and 6c, a single mold can be used with two mold liners 600 and 610 having distinct three-dimensional contours to provide seat foam buns having two distinct configurations of trenches 108. Additionally, the thermoformed mold liner allows all of the trenches to be positioned correctly in the mold simultaneously.

In some instances, a surface of the mold liner (e.g., the surface of the mold liner positioned away from the mold surface) has a material adhered to it, for example which can be thermoformed simultaneously. The material can be used to provide improved compatibility between the mold liner and the material used to form the seat form bun. In other instances, the mold liner can include protrusions directed towards the inside of the mold, providing improved adherence of the mold liner to the foaming material used to make seat form bun.

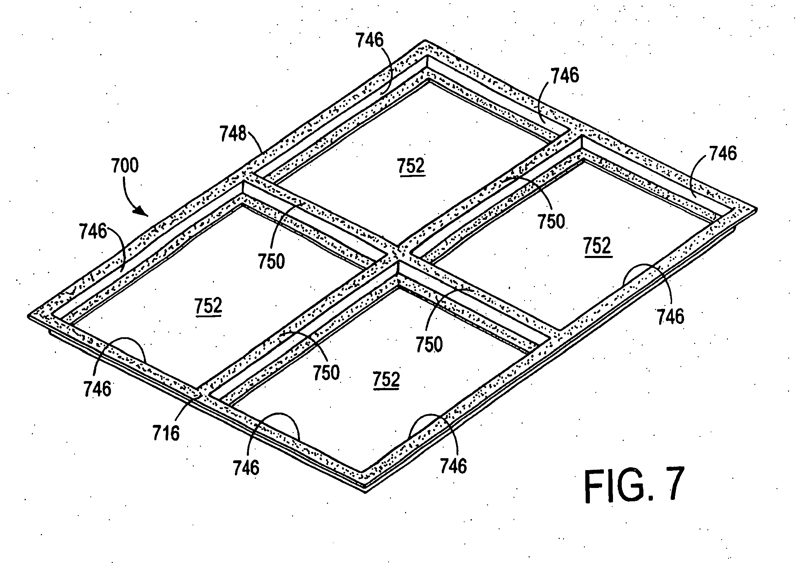

In another embodiment a molded sheet form base can be thermoformed into a framework structure. Fig. 7 depicts a top view of a framework 700 including four outer sides 746 that form an outer rectangle 748. Inside the outer rectangle are four inner members 750 that are positioned together to define four rectangular openings 752.

In some instances, the framework 700 can be used as a framework for an air filter. The filter elements of the air filter can be positioned in the rectangular openings 752 and can include a hook engaging material that cooperates with the male fastening elements 716, to attach the filter to the some of the fastener elements 716 of both the outer sides 746 and the inner members 750. This method of assembling a filter allows a single filter framework to be used repeatedly while allowing the filter portion to be removed and replaced, e.g., when it is clogged. This filter/framework assembly would be useful, for example, in air conditioners and HVAC systems. In another embodiment, the framework 700 can be used to house a window or window screen.

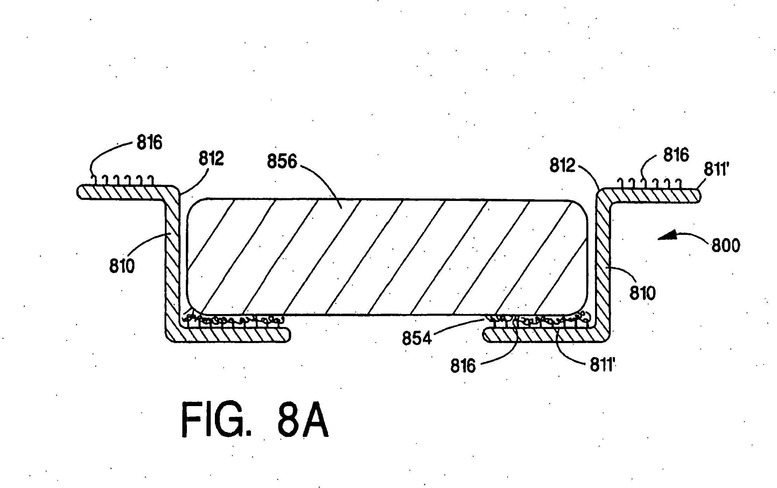

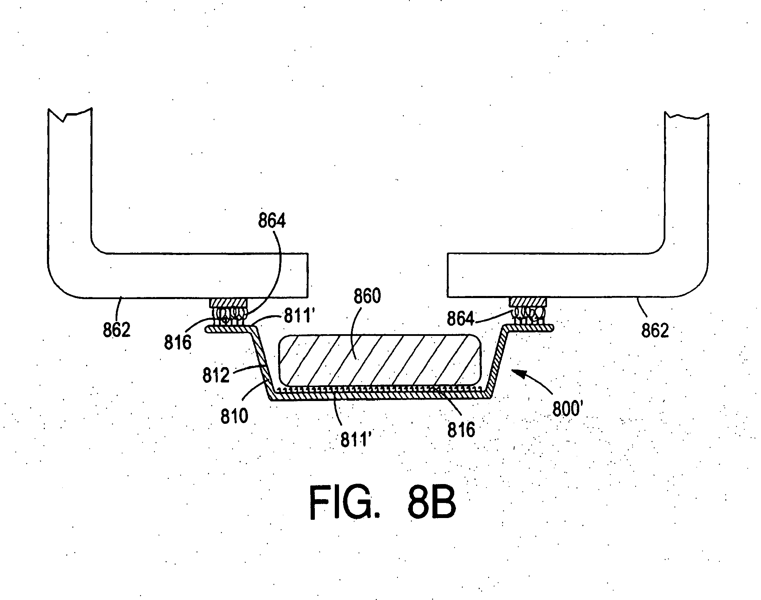

For example, Fig. 8a depicts a cross-section of a portion of a framework 800 having male fastener elements 816 extending from the horizontal portions 811' of the upper face 812 of the sheet form base 810. Some of the fastener elements 816 are engaged with a loop material 854 that is adhered to a window 856. The fastener elements 816 that are not engaged with the loop material 854 can engage with another loop material, for example, a loop material that is attached to a window frame. As depicted in Fig. 8b, in some instances, the framework 800' can engage the entire length of an article, such as an air conditioning filter 860, having male fastener elements 816 extending from the horizontal portions 811' of the upper face 812 of the sheet form base 810 where some of the fastener elements 816 are engaged with a portion of the air conditioning filter 860 and other of the fastener elements 816 are engaged with a window frame 862. The window frame 862 has loop material 864 adhered thereto to engage the male fastener elements 816 of the framework 800.

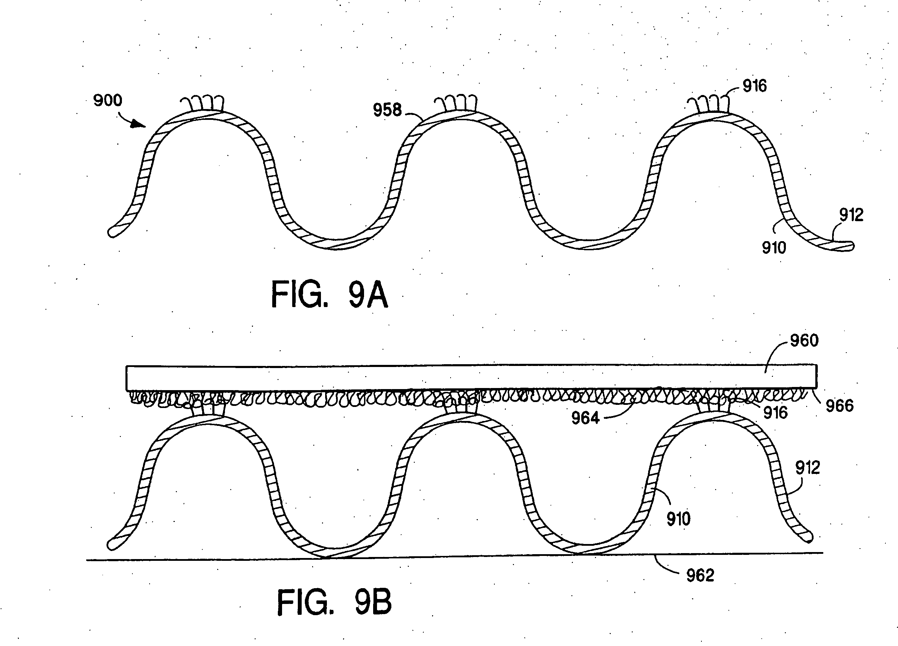

Referring to Fig. 9a, a sheet form base can be thermoformed into a touch fastener 900 having an undulating surface. The male fastener elements 916 can be positioned at one or more crests 958 of the undulating sheet form base 910, as shown in Fig. 9a. Methods of selectively positioning hooks on portions of the sheet form base are disclosed in U.S. Patent 2004 222551.

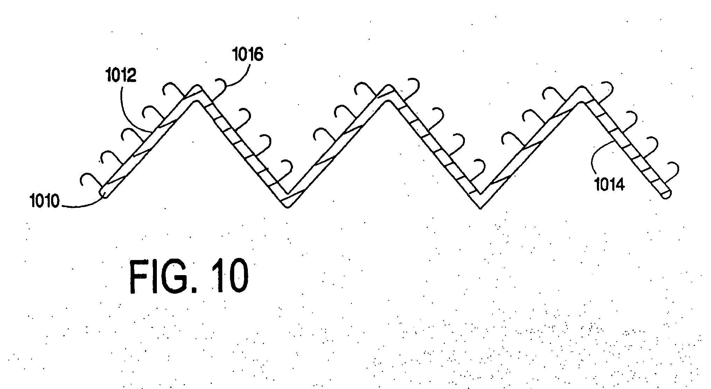

Alternatively, the touch fastener 900 can have fastener elements 916 extending over substantially the entire upper face 912 of the sheet form base (not shown). While the touch fastener 900 undulates over its entire surface, other forms and shapes are also envisioned. For example, referring to Fig. 10, sheet form base 1010 is thermoformed to include planar portions connected through angular corners, e.g., providing a cross-section including three sides of a four-sided polygon such as an open square or rectangle, or repeating patterns, such as a repeating V.

The touch fastener 900 can be used to provide structural support and/or insulation, for example in sub flooring or between two walls to provide a means of dampening sound. Referring to Fig. 9b, touch fastener 900 can be positioned between a floor 960 and a sub floor 962, thus providing additional structural support together with insulation from both temperature and noise. The touch fastener 900 is held in place by engaging the hooks 916 extending from the upper face 912 of the sheet form base 910 with a loop material 964, which is adhered to the lower surface 966 of the floor 960. The amount of structural support provided by touch fastener 900 can vary depending on factors such as the thickness of the sheet form base 910, the elasticity of the resin of the sheet form base, and the frequency of the undulations. In addition to structural support, touch fastener 900, can also provide a "springlike" quality to the flooring.

### Example 1: Thermoforming a touch fastener

A molded Washington Penn PPH4CF2-prime Natural resin sheet form base having a thickness of about 8 mil and #29 hooks extending from the upper face was provided. Hook 29 is "J" shaped an about 15.2 mil tall.

The sheet form base was thermoformed with hooks pointed upward (away from the mold surface) using the IRWIN RESEARCH PROGRESSIVE MODEL 28. Oven ambient temperatures of the machine's preheat oven operating zones were maintained at 590F/590F/590F/415F/240F in the zones under the lower face of the sheet form base. On the upper portion of the oven a set of temperatures of 510F/510F/510F/310F/310F were maintained. Surprisingly, these temperatures did not cause melting of the hooks. The heated sheet form base was then formed via vacuum applied from the bottom of the oven (e.g. the side adjacent the lower face of the sheet form base) and subsequently cooled. Accordingly, a three-dimensional article was successfully formed without damaging the hooks or the sheet form base.

Under these conditions, articles were formed at 21-30 articles/minute. The articles were then cut both internally (e.g., to create holes) and externally (e.g. to remove them from the sheet) and stacked.

### Other Embodiments

A number of embodiments of the invention have been described. Nevertheless, it will be understood that various modifications may be made without departing from the spirit and scope of the invention.

For example, although the mold inserts and mold liners were depicted with hooks only positioned at the base of the bowl structure, other embodiments include mold inserts and mold liners having hooks covering a greater portion of a surface of the sheet form base, and in some cases, hooks can cover substantially an entire surface of the sheet form base.

For example, while the hooks shown in the figures are inverted J-shape hooks, other types of molded male fastener elements can also be used, including flat-topped, mushroom, and palm tree shaped fastener elements or combinations thereof.

The touch fasteners can include features that improve their structural stability. For example, the touch fasteners can include rib like structures and can include portions of rigid support.

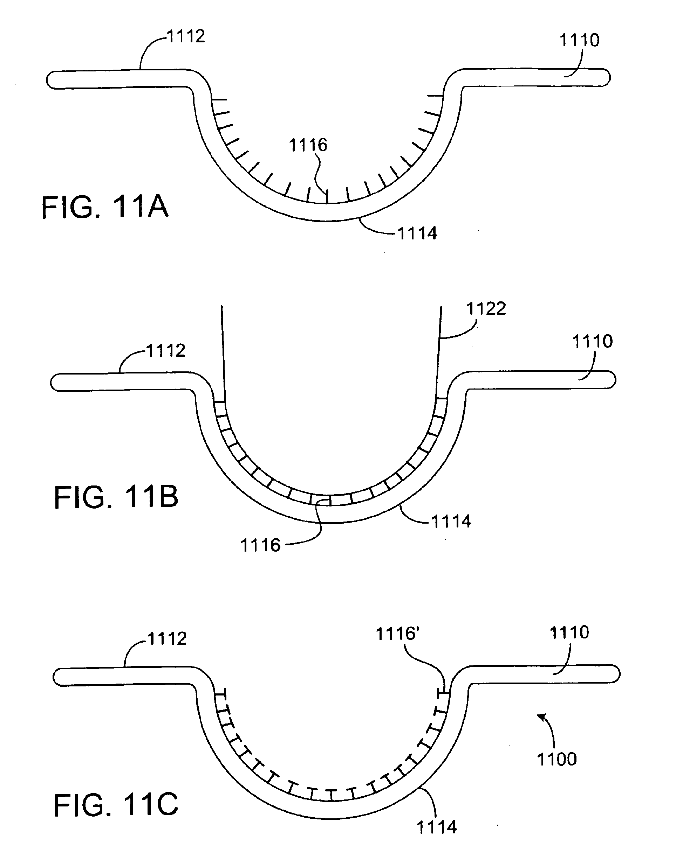

Although methods were depicted where the fastening elements were formed before the sheet form base was thermoformed to have a non-linear topography, the fastener elements can be formed after the thermoforming of the sheet form base. (See Figs. 11a-c.) Referring to Fig. 11a, a molded sheet form base 1110 is provided, the base having an upper face 1112 that carry projections 1116 and a lower face 1114. The molded sheet form base can be thermoformed, for example, as described in Figs. 2a-2c. Referring to Fig. 11b, the projections 1116 on the upper face 1112 are contacted with a heated male die 1122, thus melting and forming the tips of the projections to provide a molded touch fastener 1100 having mushroom shaped male fastener elements 1116'. (See Fig. 11c.) Alternatively, the base can be preheated from its underside and reformed into its non-planar shape under pressure sandwiched between a female mold and male die 1122 so the tops of the unheated stems are deformed.

## Claims

1. A method of making a touch fastener (100) having a non-planar topography, the method comprising:
providing a sheet form base (10,110, 310,410,510,810,910,1010,1110), the sheet form base (10,110, 310,410,510,810,910,1010,1110) having an upper face (112,412,812,912,101,1112), a lower face (114,314,414,1014,1114), the upper face of the base carrying a plurality of male fastener elements (16, 116, 416, 516, 616, 816, 916, 1016, 1116'), each fastener element (16, 116, 416, 516, 616, 816, 916, 1016, 1116') having a stem molded integrally with and extending from the upper face (112, 412, 812, 912, 1012, 1112) of the sheet form base (10, 110, 310, 410, 510, 810, 910, 1010, 1110); and
subsequently thermoforming the sheet form base (10, 110, 310, 410, 510, 810, 910, 1010) to provide the base with a non-planar topography (100, 400, 500, 600, 700, 800, 900, 1100).

2. The method of claim 1 further comprising:
continuously introducing molten resin (332) to a gap (334) formed along a peripheral surface of a rotating mold roll (330), such that the resin forms at least a part of the sheet form base (10,110, 310,410,510,810,910,1010,1110) at the peripheral mold roll (330) surface and fills an array of fixed cavities defined in the rotating mold roll (330) to form portions of the fastener elements as projections (16,116,416,516,616,816,916,1016,1116') extending from the upper face (112,412,812,912,1012,1112) of the sheet form base (10,110,310,410,510,810,910,1010,1110);
solidifying the resin (332); and
removing the solidified resin (332) from the peripheral surface of the mold roll (330) by pulling the projections from their respective cavities and preferably further comprising:
continuously introducing the sheet form base into a buffer region (342); and
thermoforming the sheet form base (10,110,310,410,510,810,910,1010,1110) to comprise a plurality of non-planar regions (411,511).

3. The method of claim 2 wherein the gap (334) is defined between the mold roll (330) and a counter-rotating pressure roll (328) or wherein the gap (334) is defined between the mold roll (330) and an injection die.

4. The method of claim 1 further comprising:
continuously introducing molten cross-linkable resin (332) to a gap (334) formed along a peripheral surface of a rotating mold roll (330) such that a cross-linkable resin (332) forms at least a portion of the stems of the male fastener elements (116);
continuously introducing a thermoformable resin (332) into the gap (334) formed along a peripheral surface of a rotating mold roll (330) such that the thermoformable resin (338) forms at least a portion of the sheet form base (10,110,310,410,510,810,910,1010,1110);
solidifying the cross-linkable and thermoformable resins (332,338); and
removing the solidified resins from the peripheral surface of the mold roll (330) by pulling the projections from their respective cavities.

5. The method of claim 1 wherein the sheet form base (10,110,310,410,510,810,910,1010,1110) comprises a thermoplastic resin (334,338), wherein the resin (332,338) comprises polypropylene, PE or PET or
wherein the resin (332,338) comprises high impact polystyrene, polymethylmethacrylate, rigid PVC, plasticized PVC or polycarbonate.

6. The method of claim 1 further comprising forming loop engageable heads on the stems, wherein the heads are formed on previously molded stems or wherein the heads are molded simultaneously with stems in fastener shaped molding cavities.

7. The method of claim 1 wherein the sheet form base (10,110,310,410,510,810,910,1010,1110) is a solid sheet or wherein the sheet form base (10,110,310,410,510,810,910,1010,1110) is a foamed sheet.

8. The method of claim 1 wherein the sheet form base (10,110,310,410,510,810,910,1010,1110) is thermoformed using vacuum (122) applied to the lower face (114,314,414,1014,1114) of the sheet form base (10,110,310,410,510,810,910,1010,1110).

9. The method of claim 1 wherein the sheet form base (10,110,310,410,510,810,910,1010,1110) is between about 0,025 mm (0.001 inch) to about 12,7 mm (0.5 inch) thick, wherein the sheet form base (10,110,310,410,510,810,910,1010,1110) is between about 0,051 mm (0.002 inch) and about 5,08 mm (0.2 inch) thick or wherein the sheet form base (10,110, 310,410,510,810,910,1010,1110) is between about 0,127 mm (0.005 inch) and about 1,27 mm (0.05) inch thick.

10. The method of claim 1 wherein the sheet form base (10,110,310,410,510,810,910,1010,1110) is thermoformed at between about 93°C (200 °F) and about 316°C (600 °F) or wherein the upper face (112,412,812,912,1012,1112) of the sheet form base (10,110, 10,410,510,810,910,1010,1110) is exposed to a temperature of between about 149°C (300 °F) and about 288°C (550 °F) and the lower face (114,314,414,1014,1114) of the sheet form base (10,110, 310,410,510,810,910,1010,1110) was exposed to a temperature of 93°C (200°F) and about 316°C (600 °F).

11. The method of claim 1 wherein the fastener elements (16,116,416,516,616,816,916,1016,1116') comprise a cross-linkable resin (332,334) and the sheet form base (10,110,310,410,510,810,910,1010,1110) comprises a thermoplastic resin (332,334).

12. The method of claim 1 wherein the sheet form base (10,110,310,410,510,810,910,1010,1110) is thermoformed into an undulating surface or wherein the sheet form base (10,110,310,410,510,810,910,1010,1110) is thermoformed into an open bowl, the open bowl further comprising a flange at a rim of the open bowl (440,540) or wherein the sheet form base (10,110,310,410,510,810,910,1010,1110) is thermoformed into a mold liner (600) or
wherein the sheet form base (10,110,310,410,510,810,910, 1010,1110) is thermoformed into a framework (700,800).

13. The method of claim 1, further comprising making a plurality of touch fasteners by thermoforming a continuous sheet form base (10,110,310,410,510,810,910,1010,1110) to provide a plurality of touch fasteners having bases with non-planar topography.

14. A touch fastener comprising;
a sheet form base (10,110,310,410,510,810,910,1010,1110) having an upper face (112,412,812,912,1012,1112) and a lower face (114,314,414,1014,1114), the upper and lower faces formed to have complementary non-planar topography to define therebetween a nominal thickness, such that the sheet form base (10,110, 310,410,510,810,910,1010,1110) forms a stable structure of three-dimensional contours in an unloaded state, and
a plurality of male fastener elements (16,116,416,516,616,816,916,1016,1116'), each fastener element having a stem molded integrally with and extending from the upper face (112,412,812,912,1012,1112) of the sheet form base (10,110,310,410,510,810,910,1010,1110), wherein at least some of the male fastener elements (16,116,416,516,616,816,916,1016,1116') extend from a contoured region of the sheet form base (10,110,310,410,510,810,910,1010,1110).

15. The article of claim 14 wherein the sheet form base (10,110,310,410,510,810,910,1010,1110) has a thickness of less than 1,27 mm (0.05 inches).

16. The article of claim 14 wherein the structure of the sheet form base (10,110,310,410,510,810,910,1010,1110) comprises a repeating V-shape (1010) or wherein the structure of the sheet form base (10,110,310,410,510,810,910,1010,1110) comprises an undulating pattern (900).

17. The article of claim 14 wherein the sheet form base (10,110,310,410,510,810,910,1010,1110) is flexible.

18. A mold insert (400,500,600,610) comprising:
a sheet form base (10,110,310,410,510,810,910,1010,1110) having an inner face (412) and an outer face (414), the inner and outer faces (412,414) formed to have complementary non-planar topography to define therebetween a nominal thickness, wherein the sheet form base defines a open bowl structure (400,540) that is stable in an unloaded state; and
a plurality of male fastener elements (16,116,416,516,616,816,916,1016,1116'), each fastener element (16,116,416,516,616,816,916,1016,1116') having a stem molded integrally with and extending from the inner face (412) of the sheet form base (10,110,310,410,510,810,910,1010,1110).

19. The mold insert of claim 18 the sheet form base (10,110,310,410,510,810,910,1010,1110) further comprising a flange (542) extending from a rim of the bowl (400,540).

20. The mold insert of claim 19 wherein the flange (542) includes metallic particles (544).

21. The mold insert of claim 18 wherein the thickness of the sheet form base (10,110,310,410,510,810,910,1010,1110) is less than 1,016 mm (0.4 inches).

22. The mold insert of claim 18 wherein the open bowl structure (400,540) is flexible.

23. The mold insert of claim 18 wherein the bowl (400,540) is constructed to withstand greater than atmospheric pressure exerted on the outside of the bowl (400,540) without collapse.

24. The mold insert of claim 18 wherein the open bowl structure (400,540) is elongated.

25. The mold insert of claim 18 wherein the sheet form base (10,110,310,410,510,810,910,1010,1110) comprises metallic particles (544).

26. A framework (700,800,800') comprising:
a sheet form base (10,110,310,410,510,810,910,1010,1110) having an upper face (112,412,812,912,1012,1112) and a lower face (114,314,414,1014,1114), the upper and lower faces formed to have complementary non-planar topography to define therebetween a nominal thickness such that the sheet form base (10,110,310,410,510,810,910,1010,1110) forms a stable structure of three-dimensional contours in an unloaded state, and wherein the sheet form base (10,110,310,410,510,810,910,1010,1110) defines an aperture (752); and
a plurality of male fastener elements(16,116,416,516,616,816,916,1016,1116'), each fastener element (16,116,416,516,616,816,916,1016,1116') having a stem molded integrally with and extending from the upper face (112,412,812,912,1012,1112) of the sheet form base (10,110, 310,410,510,810,910,1010,1110).

27. The framework of claim 26 wherein the sheet form base (10,110, 310,410,510,810,910,1010,1110) defines a plurality of apertures (752) bounded by elongated segments of the framework (746), each segment carrying multiple fastener elements.

28. A method of making a molded article, the method comprising:
providing a mold defining a mold cavity (104);
inserting a mold liner (400,500,600,610) into the mold cavity, the mold liner (400,500,600,610) comprising a sheet form base (10,110, 310,410,510,810,910,1010,1110) formed to have an inner face (412) and an outer face (414), the inner and outer faces (412,414) having complementary non-planar topography to define therebetween a nominal thickness such that the sheet form base (10,110,310,410,510,810,910,1010,1110) forms a stable structure of three-dimensional contours in an unloaded state and a plurality of male fastener elements (16,116,416,516,616,816,916,1016,1116'), each fastener element (16,116,416,516,616,816,916,1016,1116') having a stem molded integrally with and extending from the outer face of the sheet form base (10,110,310,410,510,810,910,1010,1110), wherein the mold liner (400,500,600,610) is shaped to conform to at least a portion of the molded article; and
placing the mold liner (400,500,600,610) against the surface (106) of the mold so the fastener elements (16,116,416,516,616,816,916,1016,1116')
extends toward the surface (106) of the mold; and
delivering a foam into the mold cavity (104) and allowing the foam to solidify.

29. The method of claim 28 wherein the mold liner (600,610) is sized to extend across an extent of the mold cavity (104) to position the fastener elements (16,116,416,516,616,816,916,1016,1116').

30. The method of claim 28 wherein the topography of the mold liner (400,500,600,610) defines a trench in the molded article.

31. The method of claim 28 the mold liner (400,500,600,610) further comprising a material adhered to the inner surface of the sheet form base (10,110, 310,410,510,810,910,1010,1110).

32. The method of claim 28 the mold liner (400,500,600,610) further comprising protrusions extending from the inner face of the sheet form base (10,110,310,410,510,810,910,1010,1110), extending away from the surface (106) of the mold.

## Patentansprüche

1. Verfahren zur Herstellung eines Klettverschlusses (100) mit einer nicht ebenen Topographie bzw. Oberflächenstruktur, wobei das Verfahren umfaßt:
Bereitstellen eines schichtförmigen Trägers (10, 110, 310, 410, 510, 810, 910, 1010, 1110), wobei der schichtförmige Trägers (10, 110, 310, 410, 510, 810, 910, 1010, 1110) eine Oberseite (112, 412, 812, 912, 1012, 1112), eine Unterseite (114, 314, 414, 1014, 1114) hat, wobei die Oberseite des Trägers eine Vielzahl von männlichen Verschlußelementen (16, 116, 416, 516, 616, 816, 916, 1016, 1116') trägt, wobei jedes Verschlußelement (16, 116, 416, 516, 616, 816, 916, 1016, 1116') einen Schaft hat, der integral mit ihm geformt ist und sich von der Oberseite (112, 412, 812, 912, 1012, 1112) des schichtförmigen Trägers bzw. Basis (10, 110, 310, 410, 510, 810, 910, 1010, 1110) erstreckt; und
danach Thermoformen des schichtförmigen Trägers (10, 110, 310, 410, 510, 810, 910, 1010), um den Träger mit einer nicht ebenen Topographie (100, 400, 500, 600, 700, 800, 900, 1100) bereitzustellen.

2. Verfahren nach Anspruch 1, das ferner umfaßt:
kontinuierliches Einführen von geschmolzenem Harz (332) an einen Spalt (334), der entlang einer Umfangs- bzw. Mantelfläche einer rotierenden Formwalze (330) ausgebildet ist, so daß das Harz zumindest einen Teil des schichtförmigen Trägers (10, 110, 310, 410, 510, 810, 910, 1010, 1110) auf der Mantelfläche der Formwalze (330) bildet und eine Anordnung bzw. ein Feld fester Hohlräume, die in der rotierenden Formwalze (330) definiert sind, füllt, um Abschnitte der Verschlußelemente als Vorsprünge (16, 116, 416, 516, 616, 816, 916, 1016, 1116') zu bilden, die sich von der Oberseite (112, 412, 812, 912, 1012, 1112) des schichtförmigen Trägers (10, 110, 310, 410, 510, 810, 910, 1010, 1110) erstrecken;
Verfestigen des Harzes (332); und
Entfernen des verfestigten Harzes (332) von der Mantelfläche der Formwalze (330) durch Ziehen der Vorsprünge aus ihren jeweiligen Hohlräumen, und das vorzugsweise ferner aufweist:
kontinuierliches Einführen des schichtförmigen Trägers in einen Pufferbereich (342); und
Thermoformen des schichtförmigen Trägers (10, 110, 310, 410, 510, 810, 910, 1010, 1110), um eine Vielzahl an nicht ebenen Regionen (411, 511) zu umfassen.

3. Verfahren nach Anspruch 2, wobei der Spalt (334) zwischen der Formwalze (330) und der gegenläufigen Druckwalze (328) definiert ist oder wobei der Spalt (334) zwischen der Formwalze (330) und einem Einspritzstempel definiert ist.

4. Verfahren nach Anspruch 1, das ferner umfaßt:
kontinuierliches Einführen von geschmolzenem quervernetzbarem Harz (332) in einen Spalt (334), der entlang einer Umfangs- bzw. Mantelfläche einer rotierenden Formwalze (330) definiert ist, so daß ein quervernetzbares Harz (332) zumindest einen Abschnitt der Schäfte der männlichen Verschlußelemente (116) bildet;
kontinuierliches Einführen eines thermoformbaren Harzes (332) in den entlang einer Umfangs- bzw. Mantelfläche einer rotierenden Formwalze (330) definierten Spalt (334), so daß das thermoformbare Harz (338) zumindest einen Abschnitt des schichtförmigen Trägers (10, 110, 310, 410, 510, 810, 910, 1010, 1110) bildet;
Verfestigen der quervernetzbaren und thermoformbaren Harze (332, 338); und
Entfernen der verfestigten Harze von der Mantelfläche der Formwalze (330) durch Ziehen der Vorsprünge aus ihren jeweiligen Hohlräumen.

5. Verfahren nach Anspruch 1, wobei der schichtförmige Träger (10, 110, 310, 410, 510, 810, 910, 1010, 1110) ein thermoplastisches Harz (334, 338) umfaßt, wobei das Harz (332, 338) Polypropylen, PE oder PET umfaßt oder
wobei das Harz (332, 338) hochschlagfestes Penystyrol, Polymethylmethakrylat, hartes PVC, plastifiziertes PVC oder Polykarbonat umfaßt.

6. Verfahren nach Anspruch 1, das ferner umfaßt: Ausbilden von Schlingen erfaßbaren Köpfen auf den Schäften, wobei die Köpfe auf vorher geformten Stämmen ausgebildet werden oder wobei die Köpfe in verschlußförmigen bzw. Verschlüsse bildenden Formhohlräumen gleichzeitig mit Schäften ausgebildet werden.

7. Verfahren nach Anspruch 1, wobei der schichtförmige Träger (10, 110, 310, 410, 510, 810, 910, 1010, 1110) eine massive Schicht ist oder wobei der schichtförmige Träger (10, 110, 310, 410, 510, 810, 910, 1010, 1110) eine geschäumte Schicht ist.

8. Verfahren nach Anspruch 1, wobei der schichtförmige Träger (10, 110, 310, 410, 510, 810, 910, 1010, 1110) unter Verwendung eines Vakuums (122) thermogeformt wird, welches an der Unterseite (114, 314, 414, 1014, 1114) des schichtförmigen Trägers (10, 110, 310, 410, 510, 810, 910, 1010, 1110) angelegt wird.

9. Verfahren nach Anspruch 1, wobei der schichtförmige Träger (10, 110, 310, 410, 510, 810, 910, 1010, 1110) zwischen etwa 0,025 mm (0,001 Inch) und etwa 12,7 mm (0,5 Inch) dick ist, wobei der schichtförmige Träger (10, 110, 310, 410, 510, 810, 910, 1010, 1110) zwischen etwa 0,051 mm (0,002 Inch) und etwa 5,08 mm (0,2 Inch) dick ist oder wobei der schichtförmige Träger (10, 110, 310, 410, 510, 810, 910, 1010, 1110) zwischen etwa 0,127 mm (0,005 Inch) und etwa 1,27 mm (0,05 Inch) dick ist.

10. Verfahren nach Anspruch 1, wobei der schichtförmige Träger (10, 110, 310, 410, 510, 810, 910, 1010, 1110) zwischen etwa 93°C (200°F) und etwa 316°C thermogeformt wird, oder wobei die Oberseite (112, 412, 812, 912, 1012, 1112) des schichtförmigen Trägers (10, 110, 310, 410, 510, 810, 910, 1010, 1110) einer Temperatur zwischen etwa 149°C (300°F) und etwa 288°C (550°F) ausgesetzt wird und die Unterseite (114, 314, 414, 1014, 1114) des schichtförmigen Trägers (10, 110, 310, 410, 510, 810, 910, 1010, 1110) einer Temperatur von 93°C (200°F) und etwa 316°C (600°F) ausgesetzt wurde.

11. Verfahren nach Anspruch 1, wobei die Verschlußelemente (16, 116, 416, 516, 616, 816, 916, 1016, 1116') ein quervernetzbares Harz (332, 334) umfassen und der schichtförmige Träger (10, 110, 310, 410, 510, 810, 910, 1010, 1110) ein thermoplastisches Harz (332, 334) umfaßt.

12. Verfahren nach Anspruch 1, wobei der schichtförmige Träger (10, 110, 310, 410, 510, 810, 910, 1010, 1110) in eine Wellenfläche thermogeformt wird oder wobei der schichtförmige Träger (10, 110, 310, 410, 510, 810, 910, 1010, 1110) in eine offene Schale thermogeformt wird, wobei die offene Schale ferner einen Flansch an einem Rand der offenen Schale (440, 540) umfaßt, oder wobei der schichtförmige Träger (10, 110, 310, 410, 510, 810, 910, 1010, 1110) zu einer Formauskleidung (600) thermogeformt wird oder wobei der schichtförmige Träger (10, 110, 310, 410, 510, 810, 910, 1010, 1110) zu einem Rahmen (700, 800) thermogeformt wird.

13. Verfahren nach Anspruch 1, das ferner die Herstellung einer Vielzahl von Klettverschlüssen durch Thermoformen eines zusammenhängenden schichtförmigen Trägers (10, 110, 310, 410, 510, 810, 910, 1010, 1110) umfaßt, um eine Vielzahl von Klettverschlüssen mit Trägern mit einer nicht ebenen Topographie bereitzustellen.

14. Klettverschluß, umfassend:
einen schichtförmigen Träger bzw. Basis (10, 110, 310, 410, 510, 810, 910, 1010, 1110) mit einer Oberseite (112, 412, 812, 912, 1012, 1112) und einer Unterseite (114, 314, 414, 1014, 1114), wobei die Ober- und Unterseiten derart ausgebildet sind, daß sie eine komplementäre nicht ebene Topographie haben, um dazwischen eine Nenndicke zu definieren, so daß der schichtförmige Träger (10, 110, 310, 410, 510, 810, 910, 1010, 1110) in einem unbelasteten Zustand eine stabile Struktur mit dreidimensionalen Profilen bildet, und
eine Vielzahl männlicher Verschlußelemente (16, 116, 416, 516, 616, 816, 916, 1016, 1116'), wobei jedes Verschlußelement einen integral damit geformten Schaft hat, der sich von der Oberseite (112, 412, 812, 912, 1012, 1112) des schichtförmigen Trägers (10, 110, 310, 410, 510, 810, 910, 1010, 1110) erstreckt,
wobei zumindest einige der männlichen Verschlußelemente (16, 116, 416, 516, 6161, 816, 916, 1016, 1116') sich von einer profilierten Region des schichtförmigen Trägers (10, 110, 310, 410, 510, 810, 910, 1010, 1110) erstrecken.

15. Artikel nach Anspruch 14, wobei der schichtförmige Träger (10, 110, 310, 410, 510, 810, 910, 1010, 1110) eine Dicke von weniger al 1,27 mm (0,05 Inch) hat.

16. Artikel nach Anspruch 14, wobei die Struktur des schichtförmigen Trägers (10, 110, 310, 410, 510, 810, 910, 1010, 1110) eine sich wiederholende V-Form (1010) umfaßt oder wobei die Struktur des schichtförmigen Trägers (10, 110, 310, 410, 510, 810, 910, 1010, 1110) ein Wellenmuster (900) umfaßt.

17. Artikel nach Anspruch 14, wobei der schichtförmige Träger (10, 110, 310, 410, 510, 810, 910, 1010, 1110) flexibel ist.

18. Formeinsatz (400, 500, 600, 610), umfassend:
einen schichtförmigen Träger bzw. Basis (10, 110, 310, 410, 510, 810, 910, 1010, 1110) mit einer Innenseite (412) und einer Außenseite (414), wobei die Innen- und Außenseiten (412, 414) derart ausgebildet sind, daß sie eine komplementäre nicht ebene Topographie haben, um eine Nenndicke dazwischen zu definieren, wobei der schichtförmige Träger eine offene Schalenstruktur (400, 540) definiert, die in einem unbelasteten Zustand stabil ist; und
eine Vielzahl männlicher Verschlußelemente (16, 116, 416, 516, 616, 816, 916, 1016, 1116'), wobei jedes Verschlußelement (16, 116, 416, 516, 616, 816, 916, 1016, 1116') einen integral damit geformten Schaft hat, der sich von der Innenseite (412) des schichtförmigen Trägers (10, 110, 310, 410, 510, 810, 910, 1010, 1110) erstreckt.

19. Formeinsatz nach Anspruch 18, wobei der schichtförmige Träger (10, 110, 310, 410, 510, 810, 910, 1010, 1110) ferner einen Flansch (542) umfaßt, der sich von einem Rand der Schale (400, 540) erstreckt.

20. Fromeinsatz nach Anspruch 19, wobei der Flansch (542) metallische Partikel (544) umfaßt.

21. Formeinsatz nach Anspruch 18, wobei die Dicke des schichtförmigen Trägers (10, 110, 310, 410, 510, 810, 910, 1010, 1110) weniger als 1,016 mm (0,4 Inch) ist.

22. Formeinsatz nach Anspruch 18, wobei die offene Schalenstruktur (400, 540) flexibel ist.

23. Formeinsatz nach Anspruch 18, wobei die Schale (400, 540) derart aufgebaut ist, daß sie einem von außen auf die Schale (400, 540) ausgeübten Druck, der höher als der Atmosphärendruck ist, standhält, ohne zusammenzubrechen.

24. Formeinsatz nach Anspruch 18, wobei die offene Schalenstruktur (400, 540) länglich ist.

25. Formeinsatz nach Anspruch 18, wobei der schichtförmige Träger (10, 110, 310, 410, 510, 810, 910, 1010, 1110) metallische Partikel (544) umfaßt.

26. Rahmen (700, 800, 800'), umfassend:
einen schichtförmigen Träger bzw. Basis (10, 110, 310, 410, 510, 810, 910, 1010, 1110) mit einer Oberseite (112, 412, 812, 912, 1012, 1112) und einer Unterseite (114, 314, 414, 1014, 1114), wobei die Ober- und Unterseiten derart ausgebildet sind, daß sie eine komplementäre nicht ebene Topographie haben, um dazwischen eine Nenndicke zu definieren, so daß der schichtförmige Träger (10, 110, 310, 410, 510, 810, 910, 1010, 1110) in einem unbelasteten Zustand eine stabile Struktur mit dreidimensionalen Profilen bildet, und wobei der schichtförmige Träger (10, 110, 310, 410, 510, 810, 910, 1010, 1110) eine Öffnung (752) definiert; und
eine Vielzahl männlicher Verschlußelemente (16, 116, 416, 516, 616, 816, 916, 1016, 1116'), wobei jedes Verschlußelement (16, 116, 416, 516, 616, 816, 916, 1016, 1116') einen integral damit geformten Schaft hat, der sich von der Oberseite (112, 412, 812, 912, 1012, 1112) des schichtförmigen Trägers (10, 110, 310, 410, 510, 810, 910, 1010, 1110) erstreckt.

27. Rahmen nach Anspruch 26, wobei der schichtförmige Träger (10, 110, 310, 410, 510, 810, 910, 1010, 1110) eine Vielzahl von Öffnungen (752) definiert, die von länglichen Segmenten des Rahmens (746) begrenzt sind, wobei jedes Segment mehrere Verschlußelemente trägt.

28. Verfahren zur Herstellung eines Formartikels, wobei das Verfahren umfaßt:
Bereitstellen einer Form, die einen Formhohlraum (104) definiert;
Einführen einer Formauskleidung (400, 500, 600, 610) in den Formhohlraum, wobei die Formauskleidung (400, 500, 600, 610) einen schichtförmigen Träger bzw. Basis (10, 110, 310, 410, 510, 810, 910, 1010, 1110) umfaßt, der mit einer Innenseite (412) und einer Außenseite (414) ausgebildet ist, wobei die Innen- und Außenseiten (412, 414) derart ausgebildet werden, daß sie eine komplementäre nicht ebene Topographie haben, um eine Nenndicke dazwischen zu definieren, so daß der schichtförmige Träger (10, 110, 310, 410, 510, 810, 910, 1010, 1110) in einem unbelasteten Zustand eine stabile Struktur mit dreidimensionalen Profilen und eine Vielzahl männlicher Verschlußelemente (16, 116, 416, 516, 616, 816, 916, 1016, 1116') bildet, wobei jedes Verschlußelement (16, 116, 416, 516, 616, 816, 916, 1016, 1116') einen integral damit geformten Schaft hat, der sich von der Außenseite (412) des schichtförmigen Trägers (10, 110, 310, 410, 510, 810, 910, 1010, 1110) erstreckt, wobei die Formauskleidung (400, 500, 600, 610) geformt ist, um wenigstens einem Teil des Formartikels zu entsprechen; und
Anordnen der Formauskleidung (400, 500, 600, 610) anliegend an der Fläche (106) der Form, so daß sich die Verschlußelemente (16, 116, 416, 516, 616, 816, 916, 1016, 1116') in Richtung der Fläche (106) der Form erstrecken; und
Zuführen eines Schaumstoffs in den Formhohlraum (104) und Verfestigenlassen des Schaumstoffs.

29. Verfahren nach Anspruch 28, wobei die Formauskleidung (600, 610) so dimensioniert ist, daß sie sich über eine Länge des Formhohlraums (104) erstreckt, um die Verschlußelemente (16, 116, 416, 516, 616, 816, 916, 1016, 1116') zu positionieren.

30. Verfahren nach Anspruch 28, wobei die Topographie der Formauskleidung (400, 500, 600, 610) einen Einschnitt in dem Formartikel definiert.

31. Verfahren nach Anspruch 28, wobei die Formauskleidung (400, 500, 600, 610) ferner ein Material umfaßt, das an die Innenfläche des schichtförmigen Trägers (10, 110, 310, 410, 510, 810, 910, 1010, 1110) geklebt ist.

32. Verfahren nach Anspruch 28, wobei die Formauskleidung (400, 500, 600, 610) ferner Vorsprünge umfaßt, die sich von der Innenseite des schichtförmigen Trägers (10, 110, 310, 410, 510, 810, 910, 1010, 1110) weg von der Fläche der Form (106) erstrecken.

## Revendications

1. Méthode de fabrication d'une fixation à boucles et à crochets (100) ayant une topographie non planaire, la méthode comprenant :
la fourniture d'une base en forme de feuille (10, 110, 310, 410, 510, 810, 910, 1010, 1110), la base en forme de feuille (10, 110, 310, 410, 510, 810, 910, 1010, 1110) ayant une face supérieure (112, 412, 812, 912, 101, 1112), une face inférieure (114, 314, 414, 1014, 1114), la face supérieure de la base portant une pluralité d'éléments de fixation mâles (16, 116, 416, 516, 616, 816, 916, 1016, 1116'), chaque élément de fixation (16, 116, 416, 516, 616, 816, 916, 1016, 1116') ayant une tige moulée en un seul tenant avec et s'étendant depuis la face supérieure (112, 412, 812, 912, 101, 1112) de la base en forme de feuille (10, 110, 310, 410, 510, 810, 910, 1010, 1110) ; et
le thermoformage subséquent de la base en forme de feuille (10, 110, 310, 410, 510, 810, 910, 1010, 1110) afin de fournir à la base une topographie non planaire (100, 400, 500, 600, 700, 900, 1100).

2. Méthode selon la revendication 1, comprenant en outre :
l'introduction en continu de résine moulée (332) vers un interstice (334) formé le long d'une surface périphérique d'un rouleau de moulage en rotation (330), de telle sorte que la résine forme au moins une partie de la base en forme de feuille (10, 110,310,410,510, 810, 910, 1010, 1110) sur la surface périphérique du rouleau de moulage en rotation (330) et remplisse une rangée de cavités fixées, définies dans le rouleau de moulage en rotation (330) pour former des parties d'éléments de fixation comme projections (16, 116, 416, 516, 616, 816, 916, 1016, 1116') s'étendant depuis la face supérieure (112, 412, 812, 912, 101, 1112) de la base en forme de feuille (10, 110, 310, 410, 510, 810, 910, 1010, 1110) ;
la solidification de la résine (332) ; et
l'enlèvement de la résine solidifiée (332) depuis la surface périphérique du rouleau de moulage (330) en tirant les projections depuis leurs cavités respectives et comprenant en outre de préférence :
l'introduction en continu de la base en forme de feuille jusque dans une région tampon (342) ; et
le thermoformage de la base en forme de feuille (10, 110, 310, 410, 510, 810, 910, 1010, 1110) afin de renfermer une pluralité de régions non planaires (411, 511).

3. Méthode selon la revendication 2, dans laquelle l'interstice (334) est défini entre le rouleau de moulage (330) et un rouleau presseur tournant en sens inverse (328) ou dans laquelle l'interstice (334) est défini entre le rouleau de moulage (330) et une filière d'injection.

4. Méthode selon la revendication 1, comprenant en outre :
l'introduction en continu de résine moulée réticulable (332) vers un interstice (334) formé le long d'une surface périphérique d'un rouleau de moulage en rotation (330), de telle sorte qu'une résine réticulable (332) forme au moins une partie des tiges des éléments de fixation mâles (116) ;
l'introduction en continu d'une résine thermoformable (332) jusque dans l'interstice (334) formé le long d'une surface périphérique d'un rouleau de moulage en rotation (330), de telle sorte que la résine thermoformable (338) forme au moins une partie de la base en forme de feuille (10, 110, 310, 410, 510, 810, 910, 1010, 1110) ;
la solidification des résines (332, 338) ; et
l'enlèvement des résines solidifiées depuis la surface périphérique du rouleau de moulage (330) en tirant les projections depuis leurs cavités respectives.

5. Méthode selon la revendication 1, dans laquelle la base en forme de feuille (10, 110, 310, 410, 510, 810, 910, 1010, 1110) comprend une résine thermoplastique (334, 338), sachant que la résine (332, 338) comprend du polypropylène, du PE, du PET ou sachant que la résine (332, 338) comprend du polystyrène à haute résistance aux impacts, du polyméthylmétacrylate, du PVC rigide, du PVC plastifié ou du polycarbonate.

6. Méthode selon la revendication 1, comprenant en outre le formage de têtes pouvant être engagées en faisant boucle sur les tiges, dans laquelle les têtes sont formées sur des tiges moulées préalablement ou dans laquelle les têtes sont moulées simultanément avec les tiges dans des cavités de moulage adaptées à la forme des fixations.

7. Méthode selon la revendication 1, dans laquelle la base en forme de feuille (10, 110, 310, 410, 510, 810, 910, 1010, 1110) est une feuille solide ou dans laquelle la base en forme de feuille (10, 110, 310, 410, 510, 810, 910, 1010, 1110) est une feuille moussée.

8. Méthode selon la revendication 1, dans laquelle la base en forme de feuille (10, 110, 310, 410, 510, 810, 910, 1010, 1110) est thermoformée en utilisant un vide (122) appliqué sur la face inférieure (114, 314, 414, 1014, 1114) de la base en forme de feuille (10, 110, 310, 410, 510, 810, 910, 1010, 1110).

9. Méthode selon la revendication 1, dans laquelle la base en forme de feuille (10, 110, 310, 410, 510, 810, 910, 1010, 1110) a une épaisseur entre environ 0,025 mm (0,001 pouce) et environ 12,7 mm (0,5 pouce), dans laquelle la base en forme de feuille (10, 110, 310, 410, 510, 810, 910, 1010, 1110) a une épaisseur entre environ 0,051 mm (0,002 pouce) et environ 5,08 mm (0,2 pouce) ou dans laquelle la base en forme de feuille (10, 110, 310, 410, 510, 810, 910, 1010, 1110) a une épaisseur entre environ 0,127 mm (0,005 pouce) et environ 1,27 mm (0,05 pouce).

10. Méthode selon la revendication 1, dans laquelle la base en forme de feuille (10, 110, 310, 410, 510, 810, 910, 1010, 1110) est thermoformée à une température entre environ 93°C (200°F) et environ 316°C (600°F) ou dans laquelle la face supérieure (112, 412, 812, 912, 101, 1112) de la base en forme de feuille (10, 110, 310, 410, 510, 810, 910, 1010, 1110) est exposée à une température entre environ 149°C (300°F) et environ 288°C (550°F) et la face inférieure (114, 314, 414, 1014, 1114) de la base en forme de feuille (10, 110, 310, 410, 510, 810, 910, 1010, 1110) a été exposée à une température de 93°C (200°F) et d'environ 316°C (600°F).

11. Méthode selon la revendication 1, dans laquelle les éléments de fixation (16, 116, 416, 516, 616, 816, 916, 1016, 1116') comprennent une résine réticulable (332, 334) et la base en forme de feuille (10, 110, 310, 410, 510, 810, 910, 1010, 1110) comprend une résine thermoplastique (332, 334).

12. Méthode selon la revendication 1, dans laquelle la base en forme de feuille (10, 110, 310, 410, 510, 810, 910, 1010, 1110) est thermoformée en une surface à ondulations ou dans laquelle la base en forme de feuille (10, 110, 310, 410, 510, 810, 910, 1010, 1110) est thermoformée en un bol ouvert, le bol ouvert comprenant en outre une bride sur un rebord du bol ouvert (440, 450) ou dans laquelle la base en forme de feuille (10, 110, 310, 410, 510, 810, 910, 1010, 1110) est thermoformée en une chemise de moule (600) ou dans laquelle la base en forme de feuille (10, 110, 310, 410, 510, 810, 910, 1010, 1110) est thermoformée en une construction à cadres (700, 800).

13. Méthode selon la revendication 1, comprenant en outre : la fabrication d'une pluralité de fixations à boucles et à crochets en thermoformant une base en forme de feuille continue (10, 110, 310, 410, 510, 810, 910, 1010, 1110) pour fournir une pluralité de fixations à boucles et à crochets ayant des bases avec une topographie non planaire.

14. Fixation à boucles et à crochets comprenant :
une base en forme de feuille (10, 110, 310, 410, 510, 810, 910, 1010, 1110) ayant une face supérieure (112, 412, 812, 912, 101, 1112) et une face inférieure (114, 314, 414, 1014, 1114), la face supérieure et la face inférieure étant formées pour avoir une topographie non planaire complémentaire, de telle sorte que la base en forme de feuille (10, 110, 310, 410, 510, 810, 910, 1010, 1110) forme une structure stable de contours tridimensionnels dans un état non chargé ; et
une pluralité d'éléments de fixation mâles (16, 116, 416, 516, 616, 816, 916, 1016, 1116'), chaque élément de fixation ayant une tige moulée en un seul tenant avec et s'étendant depuis la face supérieure (112, 412, 812, 912, 101, 1112) de la base en forme de feuille (10, 110, 310, 410, 510, 810, 910, 1010, 1110), sachant qu'au moins certains des éléments de fixation mâles (16, 116, 416, 516, 616, 816, 916, 1016, 1116') s'étendent depuis une région à contours de la base en forme de feuille (10, 110, 310, 410, 510, 810, 910, 1010, 1110).

15. Article de la revendication 14, dans lequel la base en forme de feuille (10, 110, 310, 410, 510, 810, 910, 1010, 1110) a une épaisseur inférieure à 1,27 mm (0,05 pouce).

16. Article de la revendication 14, dans lequel la structure de la base en forme de feuille (10, 110, 310, 410, 510, 810, 910, 1010, 1110) comprend une forme en V (1010) qui se répète ou dans lequel la structure de la base en forme de feuille (10, 110, 310, 410, 510, 810, 910, 1010, 1110) comprend un motif ondulé (900).

17. Article de la revendication 14, dans lequel la structure de la base en forme de feuille (10, 110, 310, 410, 510, 810, 9 10, 1010, 1110) est flexible.

18. Insert moulé (400, 500, 600, 610) comprenant :
une base en forme de feuille (10, 110, 310, 410, 510, 810, 910, 1010, 1110) ayant une face intérieure (412) et une face extérieure (414), la face intérieure et la face extérieure (412, 414) étant formées pour avoir une topographie non planaire complémentaire afin de définir une épaisseur nominale entre elles, sachant que la base en forme de feuille définit une structure de bol ouvert (400, 540) qui est stable dans un état non chargé ; et
une pluralité d'éléments de fixation mâles (16, 116, 416, 516, 616, 816, 916, 1016, 1116'), chaque élément de fixation ayant une tige moulée en un seul tenant avec et s'étendant depuis la face intérieure (412) de la base en forme de feuille (10, 110, 310, 410, 510, 810, 910, 1010, 1110).

19. Insert moulé selon la revendication 18, la base en forme de feuille (10, 110, 310, 410, 510, 810, 910, 1010, 1110) comprenant en outre une bride (542) s'étendant depuis un rebord du bol (400, 540).

20. Insert moulé selon la revendication 19, dans lequel la bride (542) inclut des particules métalliques (544).

21. Insert moulé selon la revendication 18, dans lequel l'épaisseur de la base en forme de feuille (10, 110, 310, 410, 510, 810, 910, 1010, 1110) est inférieure à 1,016 mm (0,4 pouce).

22. Insert moulé selon la revendication 18, dans lequel la structure de bol ouvert (400, 540) est flexible.

23. Insert moulé selon la revendication 18, dans lequel le bol (400, 540) est conçu pour résister à une pression plus grande que la pression atmosphérique exercée sur l'extérieur du bol (400, 540) sans se plier.

24. Insert moulé selon la revendication 18, dans lequel la structure de bol ouvert (400, 540) est allongée.

25. Insert moulé selon la revendication 18, dans lequel la base en forme de feuille (10, 110, 310, 410, 510, 810, 910, 1010, 1110) comprend des particules métalliques (544).

26. Construction à cadres (700, 800, 800') comprenant :
une base en forme de feuille (10, 110, 310, 410, 510, 810, 910, 1010, 1110) ayant une face supérieure (112, 412, 812, 912, 101, 1112) et une face inférieure (114, 314, 414, 1014, 1114), la face supérieure et la face inférieure étant formées pour avoir une topographie non planaire complémentaire afin de définir une épaisseur nominale entre elles, de telle sorte que la base en forme de feuille (10, 110, 310, 410, 510, 810, 910, 1010, 1110) forme une structure stable de contours tridimensionnels dans un état non chargé et sachant que la base en forme de feuille (10, 110, 310, 410, 510, 810, 910, 1010, 1110) définit une ouverture (752) ; et
une pluralité d'éléments de fixation mâles (16, 116, 416, 516, 616, 816, 916, 1016, 1116'), chaque élément de fixation ayant une tige moulée en un seul tenant avec et s'étendant depuis la face supérieure (112, 412, 812, 912, 101, 1112) de la base en forme de feuille (10, 110, 310, 410, 510, 810, 910, 1010, 1110).

27. Construction à cadres selon la revendication 26, dans laquelle la base en forme de feuille (10, 110, 310, 410, 510, 810, 910, 1010, 1110) définit une pluralité d'ouvertures (752) délimitées par des segments allongés (746) de la construction à cadres, chaque segment portant des éléments de fixation multiples.

28. Méthode de fabrication d'un article moulé, la méthode comprenant :
la fourniture d'un moule définissant un creux de moule (104) ;
l'insertion d'une chemise de moule (400, 500, 600, 610) jusque dans le creux de moule, la chemise de moule (400, 500, 600, 610) comprenant une base en forme de feuille (10, 110, 310, 410, 510, 810, 910, 1010, 1110) formée pour avoir une face intérieure (412) et une face extérieure (414), la face intérieure et la face extérieure (412, 414) ayant une topographie non planaire complémentaire afin de définir une épaisseur nominale entre elles, de telle sorte que la base en forme de feuille (10, 110, 310, 410, 510, 810, 910, 1010, 1110) forme une structure stable de contours tridimensionnels dans un état non chargé, et une pluralité d'éléments de fixation mâles (16, 116, 416, 516, 616, 816, 916, 1016, 1116'), chaque élément de fixation ayant une tige moulée en un seul tenant avec et s'étendant depuis la face extérieure (112, 412, 812, 912, 101, 1112) de la base en forme de feuille (10, 110, 310, 410, 510, 810, 910, 1010, 1110), sachant que la chemise de moule (400, 500, 600, 610) est usinée pour coïncider au moins avec une partie de l'article moulé ; et
la mise en place de la chemise de moule (400, 500, 600, 610) contre la surface (106) du moule de telle sorte que les éléments de fixation (16, 116, 416, 516, 616, 816, 916, 1016, 1116') s'étendent vers la surface (106) du moule ; et
la livraison d'une mousse jusque dans le creux de moule (104) et la possibilité que la mousse se solidifie.

29. Méthode selon la revendication 28, dans laquelle la chemise de moule (600, 610) est dimensionnée pour s'étendre à travers une extension du creux de moule (104) afin de positionner les éléments de fixation (16, 116, 416, 516, 616, 816, 916, 1016, 1116').

30. Méthode selon la revendication 28, dans laquelle la topographie de la chemise de moule (400, 500, 600, 610) définit une tranchée dans l'article moulé.

31. Méthode selon la revendication 28, la chemise de moule (400, 500, 600, 610) comprenant en outre un matériau collé sur la surface intérieure de la base en forme de feuille (10, 110, 310, 410, 510, 810, 910, 1010, 1110).

32. Méthode selon la revendication 28, la chemise de moule (400, 500, 600, 610) comprenant en outre des saillies s'étendant depuis la face intérieure de la base en forme de feuille (10, 110, 310, 410, 510, 810, 910, 1010, 1110), s'étendant à l'écart de la surface (106) du moule.
